# EUROPEAN PATENT APPLICATION

(11) **EP 3 604 781 A1**
(43) Date of publication of application: **05.02.2020**
(21) Application number: 18777550.7
(22) Date of filing: 15.03.2018
(51) Int. Cl.: F02D 45/00, F02D 35/00

(54) **INTERNAL-COMBUSTION ENGINE**

(30) Priority: 30.03.2017 JP 2017068892
(71) Applicant: Honda Motor Co., Ltd., Tokyo 107-8556 (JP)
(72) Inventor: YAMANISHI Teruhide, Wako-shi Saitama 351-0193 (JP); TOMIZAWA Kengo, Wako-shi Saitama 351-0193 (JP); YASUDA Yukihiro, Wako-shi Saitama 351-0193 (JP); TSUKAGOSHI Hiroyuki, Wako-shi Saitama 351-0193 (JP); MATSUURA Toshiki, Wako-shi Saitama 351-0193 (JP); IWASAKI Takao, Wako-shi Saitama 351-0193 (JP)
(74) Representative: Dehns
(86) International application number: PCT/JP2018/010297
(87) International publication number: WO 2018/180560

(57) **Abstract**

An internal combustion engine (27) includes a piston (57) that is housed in a cylinder (58) and moves back and forth along a cylinder axis (C), a connecting rod (61) that is connected to the piston (57), a crankshaft (62) that is connected to the connecting rod (61), a to-be-detected body (63) that rotates integrally with the crankshaft (62), and a detection sensor (64) that is made to face a trajectory of the to-be-detected body (63) and generates a pulse signal in response to movement of the to-be-detected body (63). An axis (64a) of the detection sensor (64) is positioned in a range of ±45 degrees around a rotational axis (33) of the crankshaft (62) with respect to a virtual plane (65) orthogonal to the cylinder axis (C). Thus, it is possible to provide an internal combustion engine that enables a layout to be realized that is less likely to be influenced by back and forth movement of a piston when detecting a crank angle.

## Description

### TECHNICAL FIELD

The present invention relates to an internal combustion engine that includes a piston that is housed in a cylinder and moves back and forth along a cylinder axis, a connecting rod that is connected to the piston, a crankshaft that is connected to the connecting rod, a to-be-detected body that rotates integrally with the crankshaft, and a detection sensor that is made to face a trajectory of the to-be-detected body and generates a pulse signal in response to movement of the to-be-detected body.

### BACKGROUND ART

Patent Document 1 discloses a control device of an internal combustion engine. The internal combustion engine has a single cylinder configuration. The control device detects misfiring due to an over-lean air-fuel ratio in the single cylinder internal combustion engine. In the control device it is determined whether or not the amount of change in angular velocity of a crankshaft between successive combustion cycles exceeds a predetermined threshold value. When the number of times that the amount of change exceeds the threshold value during a preset number of cycles attains a defined number of times, the control device assumes that there is misfiring of the internal combustion engine.

Patent Document 2 discloses a ring gear (a to-be-detected body) mounted on a crankshaft of an internal combustion engine, for determining misfiring. The extremity of an eddy current type microdisplacement sensor (detection sensor) opposes an outer peripheral face of the ring gear. The microdisplacement sensor detects a crank angle. The positional relationship between a crank chamber of the internal combustion engine and the microdisplacement sensor is not disclosed.

### RELATED ART DOCUMENTS

### PATENT DOCUMENTS

Patent Document 1: Japanese Patent Application Laid-open No. 2014-199040
Patent Document 2: Japanese Patent Application Laid-open No. 2002-371906

### SUMMARY OF THE INVENTION

### PROBLEMS TO BE SOLVED BY THE INVENTION

The internal combustion engine vibrates due to movement of the piston. In particular, in a single cylinder internal combustion engine, the magnitude of vibration is large along the cylinder axis. Therefore, it is necessary to dispose the detection sensor in a layout that is less likely to be influenced by back and forth movement of the piston along the cylinder axis.

The present invention has been accomplished in light of the above circumstances, and it is an object thereof to provide an internal combustion engine that enables a layout to be realized that is less likely to be influenced by back and forth movement of a piston when detecting a crank angle.

### MEANS FOR SOLVING THE PROBLEMS

According to a first aspect of the present invention, there is provided an internal combustion engine comprising a piston that is housed in a cylinder and moves back and forth along a cylinder axis, a connecting rod that is connected to the piston, a crankshaft that is connected to the connecting rod, a to-be-detected body that rotates integrally with the crankshaft, and a detection sensor that is made to face a trajectory of the to-be-detected body and generates a pulse signal in response to movement of the to-be-detected body, characterized in that an axis of the detection sensor is positioned in a range of ±45 degrees around a rotational axis of the crankshaft with respect to a virtual plane orthogonal to the cylinder axis.

According to a second aspect of the present invention, in addition to the first aspect, the internal combustion engine further comprises a crankcase that houses the crankshaft and supports the crankshaft so that the crankshaft can rotate around the rotational axis, and the axis of the detection sensor is directed toward the rotational axis of the crankshaft and is inclined around the rotational axis from a virtual plane including the rotational axis and a gravitational acceleration direction.

According to a third aspect of the present invention, in addition to the second aspect, the internal combustion engine further comprises a link part that is formed on the crankcase and is linked to a vehicle body frame in front of a rear wheel, and the detection sensor is disposed to a rear of the link part and in front of the rear wheel.

According to a fourth aspect of the present invention, in addition to the third aspect, the detection sensor is disposed so as to be offset in a vehicle width direction with respect to a central plane of the rear wheel that is orthogonal to an axle of the rear wheel.

According to a fifth aspect of the present invention, in addition to the third or fourth aspect, the detection sensor is positioned beneath a fender portion that is formed on an air cleaner connected to an intake pipe and covers an upper side of the rear wheel.

According to a sixth aspect of the present invention, in addition to any one of the second to fifth aspects, the detection sensor, when viewed from a side, overlaps a fan cover that is joined to the crankcase and covers a cooling fan joined to one end of the crankshaft.

### EFFECTS OF THE INVENTION

In accordance with the first aspect, the detection sensor can be disposed in a layout that is less likely to be influenced by the back and forth movement of the piston, and the detection sensor can therefore detect movement of the to-be-detected body with good precision.

In accordance with the second aspect, since the detection sensor is disposed in an inclined attitude, projection of the detection sensor in the height direction is suppressed with respect to the gravitational acceleration direction. It is therefore possible to dispose the detection sensor without interfering with a vehicle component.

In accordance with the third aspect, since the detection sensor is disposed between the link part of the internal combustion engine and the rear wheel, it is possible to protect the front and rear sides of the detection sensor by means of a vehicle component without providing a protecting cover.

In accordance with the fourth aspect, it is possible to make it harder for water droplets scattered up along the middle in the vehicle width direction of the rear wheel to be splashed over the detection sensor.

In accordance with the fifth aspect, it is possible to dispose efficiently the detection sensor in a space formed between the rear wheel and the fender portion of the air cleaner. Furthermore, the upper side of the detection sensor can be protected by means of the air cleaner, and it is possible to make it less likely for the detection sensor to be splashed by water droplets scattered up by the rear wheel.

In accordance with the sixth aspect, since the detection sensor has a structure that is covered by the fan cover from the side, the side of the detection sensor can be protected. In addition, since it is not visible when viewed from the side, the appearance can be improved.

### BRIEF DESCRIPTION OF DRAWINGS

[FIG. 1] FIG. 1 is a side view schematically showing the overall arrangement of a scooter (two-wheeled motor vehicle).
[FIG. 2] FIG. 2 is an enlarged vertical sectional view of an internal combustion engine when viewed from the opposite side.
[FIG. 3] FIG. 3 is an enlarged plan view of a crankcase when viewed from above.
[FIG. 4] FIG. 4 is an enlarged partial side view in which a fan cover is enlarged.
[FIG. 5] FIG.5 is an enlarged sectional view of a crankshaft.
[FIG. 6] FIG. 6 is an enlarged plan view, corresponding to FIG. 3, of part of a scooter schematically showing the arrangement of a fan cover and an air cleaner related to another embodiment.

### EXPLANATION OF REFERENCE NUMERALS AND SYMBOLS

- 12: Vehicle body frame
- 27: Internal combustion engine
- 29: Axle
- 33: Rotational axis (of crankshaft)
- 34: Crankcase
- 42: Intake pipe
- 44: Air cleaner
- 44a: Fender portion
- 54: Link part (projecting piece)
- 57: Piston
- 58: Cylinder
- 61: Connecting rod
- 62: Crankshaft
- 63: To-be-detected body (pulser ring)
- 64: Detection sensor (pulser sensor)
- 64a: Axis (detection axis)
- 65: Virtual plane (orthogonal)
- 66: Virtual plane (including gravitational acceleration direction)
- 67: Central plane (of rear wheel)
- 68: Fan cover
- 71: Cooling fan
- C: Cylinder axis
- WR: Rear wheel

### MODES FOR CARRYING OUT THE INVENTION

One embodiment of the present invention is explained below by reference to the attached drawings. In the explanation below, the front and rear, left and right, and top and bottom directions are defined based on the point of view of a person riding a two-wheeled motor vehicle.

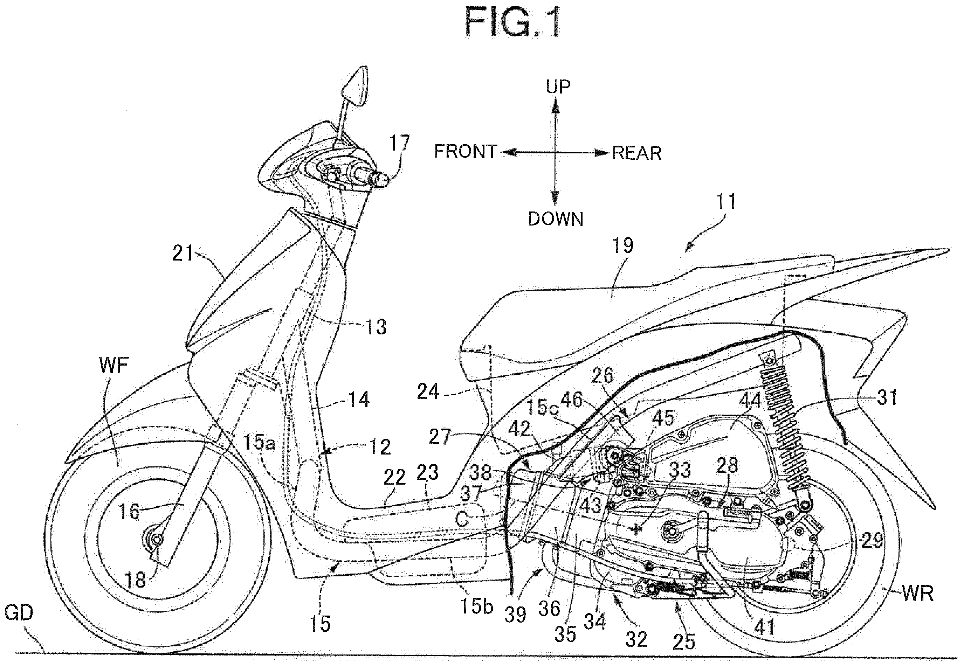

FIG. 1 schematically shows the overall arrangement of a scooter 11, which is one specific example of a saddle-ridden vehicle (two-wheeled motor vehicle). The scooter 11 includes a vehicle body frame 12. The vehicle body frame 12 is formed from a head pipe 13, a down tube 14 extending downward from the head pipe 13, and a pair of left and right side frames 15 extending rearward from the lower end of the down tube 14. A front fork 16 and handlebars 17 are rotatably supported on the head pipe 13. A front wheel WF is supported on the front fork 16 so that it can rotate around an axle 18.

The side frame 15 has a down frame portion 15a extending downward from the lower end of the down tube 14, a lower frame portion 15b extending from the rear end of the down frame portion 15a in parallel with the ground, and a seat rail portion 15c extending upward to the rear from the rear end of the lower frame portion 15b and disposed above a rear wheel WR. A rider's seat 19 is supported on the seat rail portion 15c.

The scooter 11 includes a vehicle body cover 21 covering the vehicle body frame 12. A floor 22 is defined in the vehicle body cover 21 on the lower frame portion 15b of the side frame 15 between the head pipe 13 and the rider's seat 19. A rider seated on the rider's seat 19 can place their feet on the floor 22. A fuel tank 23 is supported on the lower frame portion 15b beneath the floor 22. A storage box 24 is supported on the seat rail portion 15c within the vehicle body cover 21. The storage box 24 is opened and closed by means of the rider's seat 19.

A swing type power unit 25 is vertically swingably supported on the vehicle body frame 12 between the side frames 15 via a linking mechanism 26. The power unit 25 includes an internal combustion engine 27 that generates power based on fuel supplied from the fuel tank 23, and a transmission device 28 that is connected to the internal combustion engine 27 and transmits power of the internal combustion engine 27 to the rear wheel WR at a gear ratio that changes linearly.

The rear wheel WR is supported at the rear end of the power unit 25 so that it can rotate around an axle 29. A rear cushion unit 31 is mounted between the rear end of the power unit 25 and the rear end of the seat rail portion 15c. The power unit 25 exhibits a function as a suspension system that links the rear wheel WR to the vehicle body frame 12 so that it can swing with respect thereto.

An engine main body 32 of the internal combustion engine 27 includes a crankcase 34 that houses a crankshaft, which is described later, so that it can rotate around a rotational axis 33, a cylinder block 35 that is joined to the crankcase 34 and has a forwardly inclined cylinder axis C, a cylinder head 36 that is joined to the cylinder block 35, and a head cover 37 that is joined to the cylinder head 36. Connected to the cylinder head 36 are an intake system 38 that introduces an air-fuel mixture into a combustion chamber and an exhaust system 39 that discharges gas from the combustion chamber after combustion. The transmission device 28 includes a continuously variable transmission (not illustrated) that is housed in a transmission case 41 integrated with the crankcase 34 of the engine main body 32.

The intake system 38 includes an intake pipe 42 connected to an intake path (not illustrated) formed in the cylinder head 36, a throttle body 43 joined to the intake pipe 42, and an air cleaner 44 connected to the throttle body 43. Air is introduced via the air cleaner 44 and filtered by the air cleaner 44. In the throttle body 43 fuel is injected into air via a combustion injection valve, thus forming the air-fuel mixture. The air-fuel mixture is supplied to the intake path via the intake pipe 42.

The linking mechanism 26 includes a cross member 45 extending to the left and right in the vehicle width direction above the crankcase 34. The cross member 45 is connected via opposite ends to a bracket 46 secured to left and right seat rail portions 15c respectively. The cross member 45 is formed from a pipe having a circular cross section.

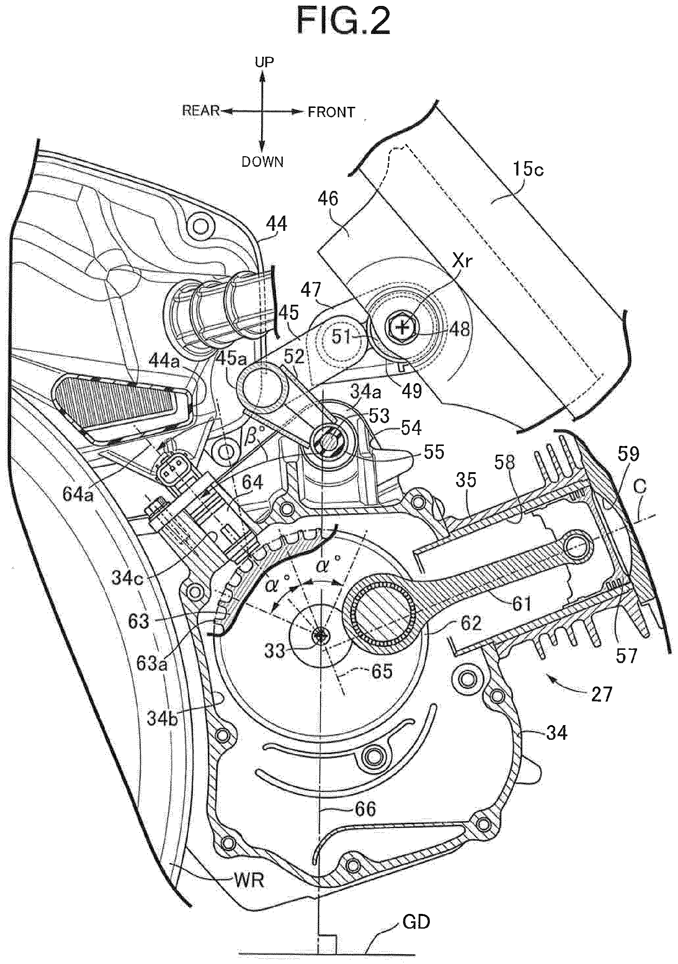

As shown in FIG. 2, a mounting member 47 is fixed to opposite ends of the cross member 45. The mounting member 47 is linked to the bracket 46 so that it can swing around a rotational axis Xr parallel to the axis of the axle 29. A cylindrical body 49 is formed on the mounting member 47, the cylindrical body 49 coaxially surrounding a swing shaft 48 fixed to the bracket 46. A damper member 51 such as a rubber is sandwiched between the swing shaft 48 and the cylindrical body 49.

A linear region 45a extending in parallel with the axle 29 at a middle position in the vehicle width direction is formed on the cross member 45. A linking body 51 inclined downward to the front is fixed to the linear region 45a. The linking body 52 changes its position forward in going downward in the gravitational direction.

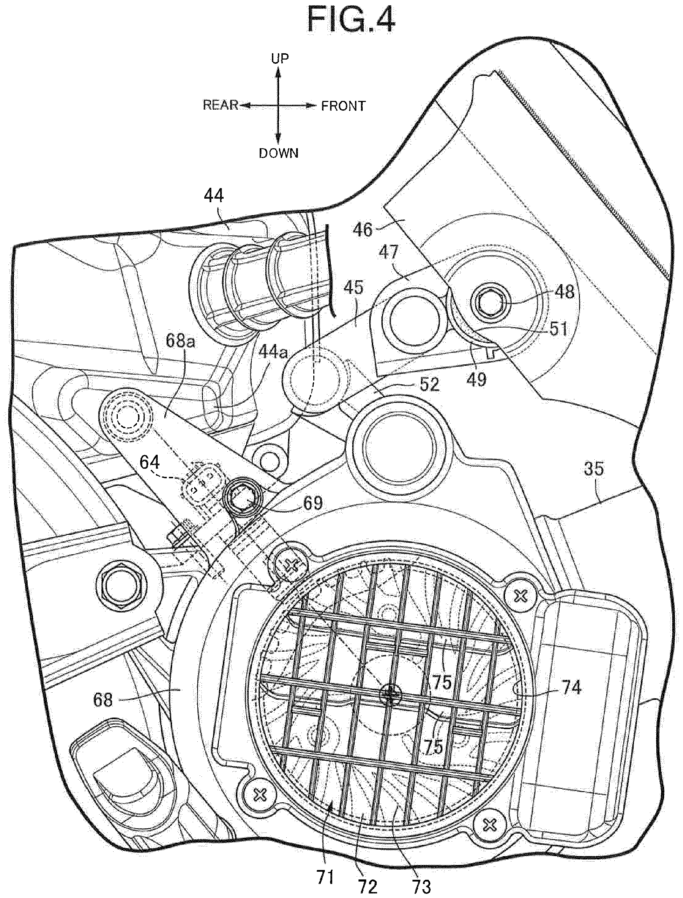

Referring in addition to FIG. 4, the linking mechanism 26 includes a shaft body 53 that is disposed above the crankcase 34 and has an axis parallel to the axis of the axle 29. The shaft body 53 is fixed to a pair of left and right projecting pieces (link parts) 54 projecting upward from an upper part of the crankcase 34. A long tube 55 fixed to the linking body 52 is linked to the shaft body 53 so that it can rotate around the axis of the shaft body 53.

As shown in FIG. 2, the internal combustion engine 27 includes a piston 57 incorporated into the cylinder block 35. The piston 57 is housed in a cylinder 58 that has the forwardly inclined cylinder axis C and is defined within the cylinder block 35. Here, the single cylinder 58, which receives the single piston 57, is formed in the cylinder block 35. A combustion chamber 49 is defined between the piston 57 and the cylinder head 36. The air-fuel mixture is introduced into the combustion chamber 49 via the intake path. The piston 57 moves back and forth along the cylinder axis C.

Linked to the piston 57 is one end of a connecting rod 61. The other end of the connecting rod 61 is linked to a crankshaft 62 within the crankcase 34. Linear movement of the piston 57 along the cylinder axis C is converted into rotation of the crankshaft 62 by the action of the connecting rod 61.

The internal combustion engine 27 includes a ring-shaped pulser ring (to-be-detected body) 63 that is joined to the crankshaft 62 coaxially with the rotational axis 33 and rotates integrally with the crankshaft 62, and a pulser sensor (detection sensor) 64 that is made to face an annular trajectory of the pulser ring 63 and generates a pulse signal in response to movement of the pulser ring 63. The pulser ring 63 includes a plurality of reluctor pieces (gear teeth) 53a that are arranged at equal intervals in a ring shape around the rotational axis 33. The reluctors 63a are disposed at intervals with a central angle of for example 10 degrees. The reluctor 63a is formed from for example a magnetic material.

The pulser sensor 64 is inserted from the outside into a sensor hole 34c bored in the crankcase 34 and is mounted on the crankcase 34. The sensor hole 34c is positioned higher than one horizontal plane including the rotational axis 33 of the crankshaft 62. The pulser sensor 64 faces the crank chamber 34b via an extremity that detects a magnetic material. The pulser sensor 64 outputs an electric signal in response to the existence of a magnetic material detected on the trajectory of the pulser ring 63. The pulser sensor 64 outputs a pulse signal that specifies an angular position of the crankshaft 62. Alternatively, the pulser sensor 64 may employ an eddy current type microdisplacement sensor.

A detection axis (axis) 64a of the pulser sensor 64 that has the highest sensitivity is positioned in a range of ±α (= 45 degrees) around the rotational axis 33 of the crankshaft 62 with respect to a virtual plane 65 orthogonal to the cylinder axis C. Here, due to the cylinder axis C having a forwardly inclined attitude, the pulser sensor 64 is disposed to the rear of the projecting piece (link part) 54 and in front of the rear wheel WR when viewed from the side of the vehicle. The pulser sensor 64 is positioned beneath a fender portion 44a formed on the air cleaner 44. Details of the fender portion 44a are described later.

In addition, the pulser sensor 64 is retained in an attitude in which it is inclined with respect to the vehicle vertical direction (gravitational acceleration direction), which is orthogonal to the ground GD. The detection axis 64a is directed toward the rotational axis 33 of the crankshaft 62 and is inclined with an angle of inclination β around the rotational axis 33 from a virtual plane 66 including the rotational axis 33 and the gravitational acceleration direction.

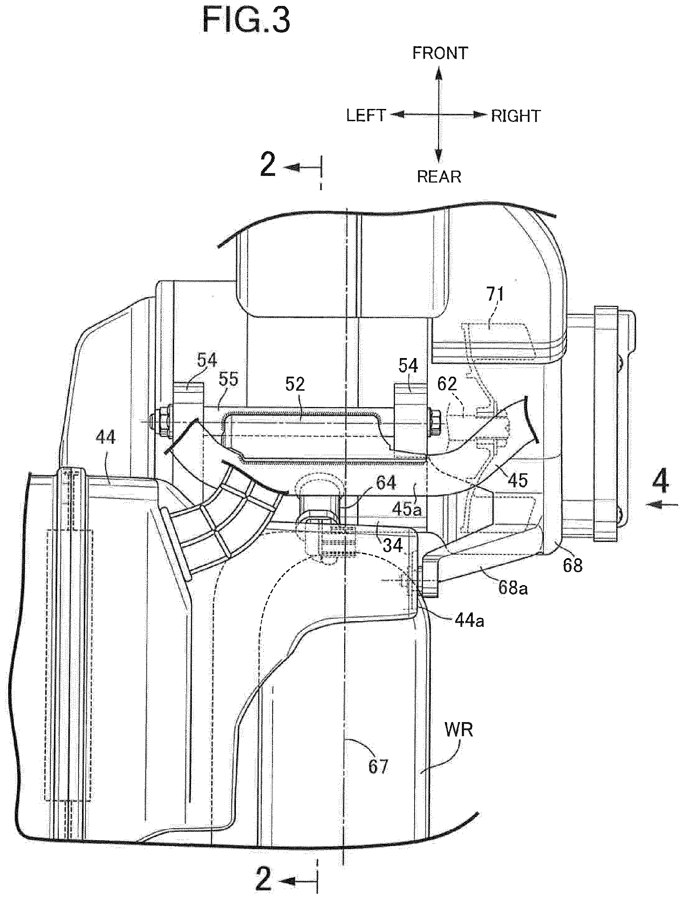

As shown in FIG. 3, the pulser sensor 64 is disposed so as to be offset in the vehicle width direction with respect to a central plane 67 of the rear wheel WR that is orthogonal to the axle of the rear wheel WR. The central plane 67 forms for example a plane of lateral symmetry with respect to the rear wheel WR (in particular a tire). The fender portion 44a of the air cleaner 44 extends in the vehicle width direction from a main body of the air cleaner 44 and is positioned beneath the seat rail portion 15c and above the rear wheel WR. The rear wheel WR is covered from above by the fender portion 44a of the air cleaner 44.

A fan cover 68 is joined to the crankcase 34. As shown in FIG. 4, the fan cover 68 may be fastened to the crankcase 34 by means of a bolt 69. The fan cover 68 covers a cooling fan 71. The cooling fan 71 is joined to one end of the crankshaft 62.

A linking portion 68a extending toward the air cleaner 44 along an external diameter of the rear wheel WR is formed on the fan cover 68. The fan cover 68 is linked to the air cleaner 44 via the extremity of the linking portion 68a. As shown in FIG. 4, the pulser sensor 64 overlaps the linking portion 68a of the fan cover 68 when viewed from the side. The pulser sensor 64 is covered by the fan cover 68 from the side.

As shown in FIG. 4, the cooling fan 71 includes a rotating body 72 mounted on the crankshaft 62. The rotating body 72 has a circular outline concentric with the rotational axis 33. A plurality of blades 73 are disposed on the surface of the rotating body 72. The cooling fan 71 is thus formed as a centrifugal fan.

A circular opening 74 concentric with the rotational axis 33 is formed in the fan cover 68. A variable louver 75 is placed in the opening 74. The aperture area of the opening 74 is changed by the action of the variable louver 75.

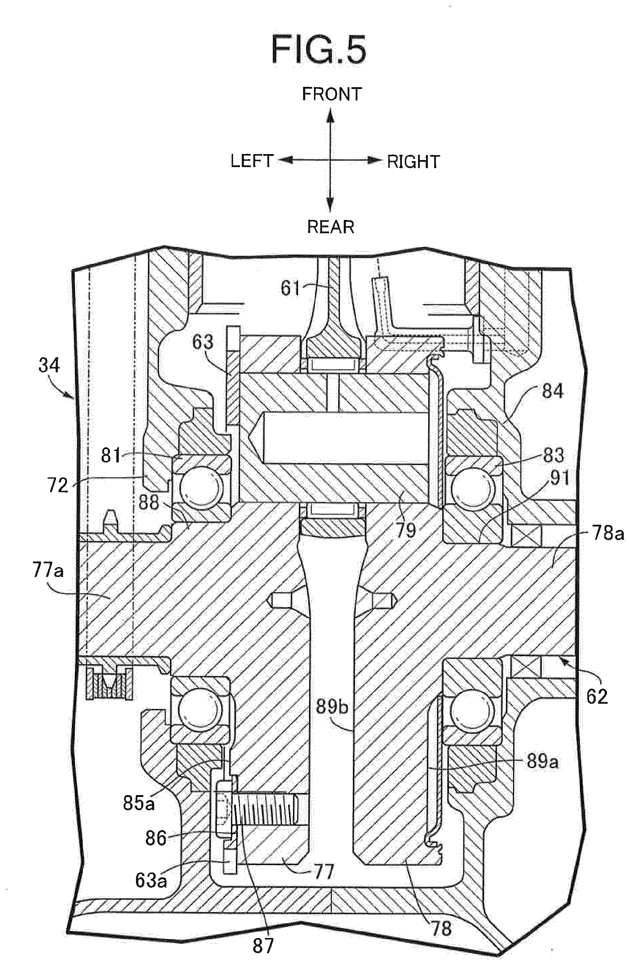

As shown in FIG. 5, the crankshaft 62 includes a disk-shaped first crank web 77 having a first shaft 77a, a disk-shaped second crank web 78 joined to the first crank web 77 and having a second shaft 78a, and a crank pin 79 linking the first crank web 77 and the second crank web 78 to each other while the first shaft 77a and the second shaft 78a are coaxially disposed. The extremity of the connecting rod 61 is linked to the crank pin 79 so that it can rotate around a rotational axis parallel to the axis of the first shaft 77a and the second shaft 78a.

The first shaft 77a of the first crank web 77 is rotatably supported on a first half body 82 of the crankcase 34 via a first bearing 81. The second shaft 78a of the second crank web 78 is rotatably supported on a second half body 84 of the crankcase 34 via a second bearing 83. The crankcase 34 is formed by joining the first half body 82 and the second half body 84.

A flat face 86 is formed on a first face 85a of the first crank web 77 along the circular outer periphery, the flat face 86 spreading within a virtual plane orthogonal to the axis of the first shaft 77a. The pulser ring 63 is superimposed on the flat face 86. The reluctor 63a of the pulser ring 63 projects further in the radial direction than the outer periphery of the first crank web 77 at least at the outer end in the radial direction. The pulser ring 63 is fastened to the first crank web 77 by means of a screw 87.

Here, the internal diameter of the pulser ring 63 is larger than the first bearing 81. The first shaft 77a is connected to the first face 85a of the first crank web 77 via an increased diameter part 88 having a larger diameter than that of the first shaft 77a. The first bearing 81 is fitted onto the increased diameter part 88. The first bearing 81 is pressed against the first face 85a of the first crank web 77. The pulser ring 63 is therefore disposed on the radially outer side of the first bearing 81.

The second crank web 78 is made to face the first crank web 77 via a second face 89b on the other side of a first face 89a. The second shaft 78a is connected to the first face 89a of the second crank web 78 via an increased diameter part 91 having a larger diameter than that of the second shaft 78a. The second bearing 83 is fitted onto the increased diameter part 91. The second bearing 83 is pressed against the first face 89a of the second crank web 78.

The operation of the internal combustion engine 27 related to the present embodiment is now explained. When the internal combustion engine 27 operates and the crankshaft 62 rotates, the pulser ring 63 rotates integrally with the crankshaft 62. The reluctor 63a of the pulser ring 63 moves around the rotational axis 33 along the annular trajectory coaxial with the rotational axis 33. The pulser sensor 64 faces the reluctor 63a and a space in turn, detects the magnetic material of the reluctor 63a, and generates a pulse signal. Since the reluctors 63a are disposed at equal intervals, the time interval of the pulse varies in response to the angular velocity.

In the present embodiment, the detection axis 64a of the pulser sensor 64 is positioned in a range of ±45 degrees around the rotational axis 33 of the crankshaft 62 with respect to the virtual plane 65 orthogonal to the cylinder axis C. Therefore, when the piston 57 moves back and forth, the gap between the extremity of the pulser sensor 64 and the reluctor 63a of the pulser ring 63 is less likely to be influenced by the back and forth movement. In this way, the pulser sensor 64 is disposed in a layout that is less likely to be influenced by the back and forth movement of the piston 57, and the pulser sensor 64 can detect movement of the pulser ring 63 with good precision.

The detection axis 64a of the pulser sensor 64 is directed toward the rotational axis 33 of the crankshaft 62 and is inclined around the rotational axis 33 from the virtual plane 66 including the rotational axis 33 and the gravitational acceleration direction. Since the pulser sensor 64 is thus disposed in an inclined attitude, projection of the pulser sensor 64 in the height direction is suppressed with respect to the gravitational acceleration direction. In particular, since the pulser sensor 64 is disposed on the upper side of the crankcase 34, the pulser sensor 64 can be disposed without interfering with a vehicle component. Moreover, although the pulser sensor 64 is disposed beneath the linking mechanism 26, since it is inclined with respect to the vehicle vertical direction (gravity acceleration direction), which is orthogonal to the ground GD, so as to correspond to the linking body 52, which is inclined downward to the front, it is possible to avoid interference between the linking mechanism 26 and the pulser sensor 64.

The pulser sensor 64 is disposed to the rear of the projecting piece 54 of the crankcase 34 and in front of the rear wheel WR. It is therefore possible to protect the front and rear sides of the pulser sensor 64 by means of a vehicle component without providing a protecting cover. Since the vehicle component also functions as a protecting member for the pulser sensor 64, any increase in the production cost can be avoided.

The pulser sensor 64 is disposed so as to be offset in the vehicle width direction with respect to the central plane 67 of the rear wheel WR orthogonal to the axle 29 of the rear wheel WR. When traveling in rain, etc., water on the road surface is scattered up along the middle in the vehicle width direction of the rotating rear wheel WR. Water droplets thus scattered up do not splash over the pulser sensor 64. It is thus possible to make it less likely for water droplets to splash over the detection sensor.

In the present embodiment, the fender portion 44a covering the rear wheel WR is formed on the air cleaner 44. The pulser sensor 64 is positioned beneath the fender portion 44a. The pulser sensor 64 is efficiently disposed in a space formed between the rear wheel WR and the fender portion 44a of the air cleaner 44. Furthermore, the upper side of the pulser sensor 64 is protected by means of the air cleaner 44. It is possible to make it less likely for the pulser sensor 64 to be splashed by water droplets scattered up by the rear wheel WR.

When viewed from the side, the pulser sensor 64 overlaps the fan cover 68 joined to the crankcase 34 and covering the cooling fan 71 joined to one end of the crankshaft 62. Since the pulser sensor 64 has a structure that is covered by the fan cover 68 from the side, the pulser sensor 64 is protected from the side. In addition, since it is not visible when viewed from the side, the appearance can be improved.

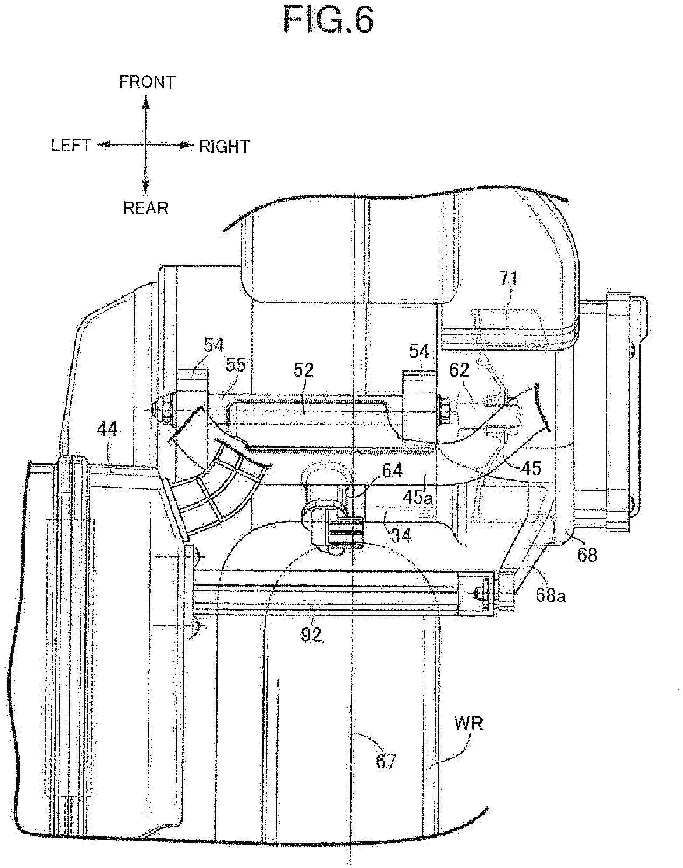

As shown in FIG. 6, when linking the fan cover 68 and the air cleaner 44, a bridging member 92 may be disposed between the fan cover 68 and the air cleaner 44. In this case, the fender portion 44a may be omitted from the air cleaner 44. Since the fan cover 68, the air cleaner 44, and the bridging member 92 are all molded from a resin material, this enables the fan cover 68 and the air cleaner 44 to reduce vibration in each other when the power unit 25 swings.

## Claims

1. An internal combustion engine (27) comprising
a piston (57) that is housed in a cylinder (58) and moves back and forth along a cylinder axis (C),
a connecting rod (61) that is connected to the piston (57),
a crankshaft (62) that is connected to the connecting rod (61),
a to-be-detected body (63) that rotates integrally with the crankshaft (62), and
a detection sensor (64) that is made to face a trajectory of the to-be-detected body (63) and generates a pulse signal in response to movement of the to-be-detected body (63),
**characterized in that** an axis (64a) of the detection sensor (64) is positioned in a range of ±45 degrees around a rotational axis (33) of the crankshaft (62) with respect to a virtual plane (65) orthogonal to the cylinder axis (C).

2. The internal combustion engine according to Claim 1, wherein the internal combustion engine further comprises
a crankcase (34) that houses the crankshaft (62) and supports the crankshaft (62) so that the crankshaft (62) can rotate around the rotational axis (33), and
the axis (64a) of the detection sensor (64) is directed toward the rotational axis (33) of the crankshaft (62) and is inclined around the rotational axis (33) from a virtual plane (66) including the rotational axis (33) and a gravitational acceleration direction.

3. The internal combustion engine according to Claim 2, wherein the internal combustion engine further comprises
a link part (54) that is formed on the crankcase (34) and is linked to a vehicle body frame (12) in front of a rear wheel (WR), and
the detection sensor (64) is disposed to a rear of the link part (54) and in front of the rear wheel (WR).

4. The internal combustion engine according to Claim 3, wherein the detection sensor (64) is disposed so as to be offset in a vehicle width direction with respect to a central plane (67) of the rear wheel (WR) that is orthogonal to an axle (29) of the rear wheel (WR).

5. The internal combustion engine according to Claim 3 or 4, wherein
the detection sensor (64) is positioned beneath a fender portion (44a) that is formed on an air cleaner (44) connected to an intake pipe (42) and covers an upper side of the rear wheel (WR).

6. The internal combustion engine according to any one of Claims 2 to 5,
wherein the detection sensor (64), when viewed from a side, overlaps a fan cover (68) that is joined to the crankcase (34) and covers a cooling fan (71) joined to one end of the crankshaft (62).

## Amended claims

### Amended claims under Art. 19.1 PCT

1. (amended) An internal combustion engine (27) comprising
a piston (57) that is housed in a cylinder (58) and moves back and forth along a cylinder axis (C),
a connecting rod (61) that is connected to the piston (57),
a crankshaft (62) that is connected to the connecting rod (61),
a to-be-detected body (63) that rotates integrally with the crankshaft (62), and
a detection sensor (64) that is made to face a trajectory of the to-be-detected body (63) and generates a pulse signal in response to movement of the to-be-detected body (63),
**characterized in that** an axis (64a) of the detection sensor (64) is positioned in a range of ±45 degrees around a rotational axis (33) of the crankshaft (62) with respect to a virtual plane (65) orthogonal to the cylinder axis (C),
the internal combustion engine further comprises a crankcase (34) that houses the crankshaft (62) and supports the crankshaft (62) so that the crankshaft (62) can rotate around the rotational axis (33),
the axis (64a) of the detection sensor (64) is directed toward the rotational axis (33) of the crankshaft (62) and is inclined around the rotational axis (33) from a virtual plane (66) including the rotational axis (33) and a gravitational acceleration direction,
the internal combustion engine further comprises a link part (54) that is formed on the crankcase (34) and is linked to a vehicle body frame (12) in front of a rear wheel (WR), and
the detection sensor (64) is disposed to a rear of the link part (54) and in front of the rear wheel (WR).

2. (deleted)

3. (deleted)

4. (amended) The internal combustion engine according to Claim 1, wherein the detection sensor (64) is disposed so as to be offset in a vehicle width direction with respect to a central plane (67) of the rear wheel (WR) that is orthogonal to an axle (29) of the rear wheel (WR).

5. (amended) The internal combustion engine according to Claim 1 or 4, wherein
the detection sensor (64) is positioned beneath a fender portion (44a) that is formed on an air cleaner (44) connected to an intake pipe (42) and covers an upper side of the rear wheel (WR).

6. (amended) The internal combustion engine according to any one of Claims 1, 4 and 5,
wherein the detection sensor (64), when viewed from a side, overlaps a fan cover (68) that is joined to the crankcase (34) and covers a cooling fan (71) joined to one end of the crankshaft (62).
